# EUROPÄISCHE PATENTSCHRIFT

(11) **EP 1 040 026 B1**
(45) Veröffentlichungstag und Bekanntmachung des Hinweises auf die Patenterteilung: **18.02.2004**
(21) Anmeldenummer: 98964425.7
(22) Anmeldetag: 20.11.1998
(51) Int. Cl.: B60K 31/00

(54) **VERFAHREN ZUR REGELUNG VON GESCHWINDIGKEIT UND ABSTAND BEI ÜBERHOLVORGÄNGEN EINES KRAFTFAHRZEUGES**
METHOD FOR REGULATING SPEED AND DISTANCE DURING PASSING MANEUVERS OF A MOTOR VEHICLE
PROCEDE POUR LA REGULATION DE LA VITESSE ET DE LA DISTANCE LORS DE DEPASSEMENTS D'UN VEHICULE AUTOMOBILE

(30) Priorität: 15.12.1997 DE 19755611
(43) Veröffentlichungstag der Anmeldung: 04.10.2000
(73) Patentinhaber: Volkswagen Aktiengesellschaft, 38436 Wolfsburg (DE)
(72) Erfinder: BÄKER, Wolfgang, D-38114 Braunschweig (DE); RUCHATZ, Thomas, D-38165 Lehre (DE); ANDREAS, Peter, D-38518 Gifhorn (DE); SIEM, Jang, Tik, D-38154 Königslutter (DE)
(86) Internationale Anmeldenummer: PCT/EP1998/007493
(87) Internationale Veröffentlichungsnummer: WO 1999/030920

(56) Entgegenhaltungen:
- EP-A- 0 813 987
- DE-A- 4 209 060
- DE-A- 19 704 854
- DE-C- 4 313 568
- DICKMANNS E D: "ENTWICKLUNGSSCHRITTE ZUR ERHOEHUNG VON SICHERHEIT UND KOMFORT DURCH SEHENDE AUTOS" AUTOMATISIERUNGSTECHNIK - AT, Bd. 44, Nr. 5, 1. Mai 1996, Seiten 243-251, XP000583467

## Beschreibung

Die Erfindung bezieht sich auf ein Verfahren zur Regelung von Geschwindigkeit und/oder Abstand eines ersten Fahrzeuges zu mindestens einem vorausfahrenden Fahrzeug im Zusammenhang mit einem Überholvorgang gemäß Oberbegriff des Anspruches 1.

Eine für die Sicherheit der Fahrzeuginsassen besonders relevante Fahrsituation ist das Einleiten von Überholmanövern, da bei derartigen Überholmanövern die Aufmerksamkeit des Fahrers gleichzeitig auf verschiedene Bereiche seiner Fahrumgebung gerichtet werden muß. So ist zunächst zu beurteilen, ob die Fahrsituation auf der Überholspur bzw. Gegenfahrbahn ein Überholmanöver überhaupt zuläßt, d.h. also ein Überholmanöver durch von hinten oder entgegenkommende Fahrzeuge nicht von vornherein unmöglich gemacht wird. Erkennt der Fahrer, daß die Überholspur bzw. Gegenfahrbahn grundsätzlich ein Überholmanöver zulassen würde, so muß er weiterhin auf eventuell schon überholende und von hinten kommende Fahrzeuge zu achten, während er gleichzeitig das Fahrverhalten der vor ihm fahrenden Fahrzeuge, insbesondere auch des direkt vor ihm fahrenden Fahrzeuges im Auge behalten muß. Nach dem Entschluß für einen Überholvorgang müssen diese verschiedenen Beobachtungen ständig weiter ablaufen, während der Fahrer durch das Setzen des Blinkers sowie das Beschleunigen die Voraussetzungen schaffen muß, um auf die Überholspur überwechseln zu können und den Überholvorgang einzuleiten. Hierbei ist von besonderer Bedeutung, daß der Fahrer das Fahrverhalten des direkt vor ihm herfahrenden Fahrzeuges sowie sein eigenes Beschleunigungsverhalten ständig überprüft, so daß es nicht durch zu dichtes Auffahren und/oder Geschwindigkeitsänderungen des direkt vorausfahrenden Fahrzeuges zu gefährlichen Situationen kommen kann.

Aufgrund der Vielzahl der gleichzeitig vorzunehmenden Beobachtungen sowie der daraus abzuleitenden Handlungen ist der Überholvorgang an sich eine besonders risikoreiche Fahrsituation. Daher wurden schon Anstrengungen unternommen, diese besonders risikoreiche Fahrsituation durch den Fahrer entlastende oder ihm assistierende Systeme ungefährlicher ausgestalten zu können. Beispielsweise ist aus der DE 42 00 694 A1 ein Verfahren zur Geschwindigkeits- und Abstandsregelung eines Fahrzeuges bekannt, bei dem der aktuelle Abstand sowie die momentane Geschwindigkeit eines Fahrzeuges erfaßt und daraus die Sollwerte für Abstand und Geschwindigkeit eines Fahrzeuges ermittelt und eingestellt werden können. Das System geht dabei von dem Grundgedanken aus, daß ein Eingriff des Fahrers, der sich aus besonderen Gegebenheiten der Fahrsituation ergeben kann, unbedingt Vorrang gegenüber der automatisch ablaufenden Geschwindigkeits- bzw. Abstandsregelung haben muß. Daher wird bei dem bekannten Verfahren die Abstandsregelung nach einem Eingriff des Fahrers zeitlich begrenzt ausgesetzt. Hierdurch soll eine flexible Reaktion des Systems auf verschiedene Fahrsituationen gewährleistet sein, wobei als Auslöser für derartige Unterbrechungen das Setzen des Blinkers und/oder das Betätigen des Gaspedals herangezogen werden kann. Das vorgestellte Verfahren erlaubt zwar den unmittelbaren Eingriff des Fahrers in eine ablaufende Regelungssituation, doch wird insbesondere in dem kritischen Zeitbereich eines überholvorganges, nämlich bei der Annäherung bei gleichzeitiger Beschleunigung des Fahrzeuges an das direkt vorausfahrende Fahrzeug durch das Abschalten der Abstandsregelung und/oder der Geschwindigkeitsregelung eine Sicherheitslücke geschaffen, in der gerade eine Unterstützung des Fahrers von besonderer Bedeutung ist. Betätigt beispielsweise der Fahrer bei der Annäherung an ein direkt vorausfahrendes Fahrzeug den Blinker, so wird bei üblichen Überholvorgängen die Beschleunigung und das Ausscheren des Fahrzeuges auf die Überholspur in sehr kurzem zeitlichen Abstand von dem Betätigen des Blinkers vorgenommen werden. Dieses Ausscheren bei dem gleichzeitig üblichen Beschleunigen zum Erreichen der Fließgeschwindigkeit einer Überholspur, beispielsweise einer Autobahn führt aber zu einer unter Umständen sehr starken Annäherung des Fahrzeuges an das vorausfahrende Fahrzeug, wo eine aktive Abstandsregelung einen besonders großen Sicherheitsspielraum ergeben würde. Genau innerhalb dieses Zeitraumes wird das vorgestellte System jedoch völlig deaktiviert und erst beispielsweise nach zwei oder drei Sekunden wieder in Betrieb genommen.

Der Erfindung liegt daher die Aufgabe zugrunde, ein Verfahren zur Regelung von Geschwindigkeit und Abstand bei Überholvorgängen eines Kraftfahrzeuges zu schaffen, bei dem ohne Gefahr einer Kollision mit dem vorausfahrenden Fahrzeug dem Kraftfahrzeugführer eine erhöhte Flexibilität der Regelung beim Überholvorgang zur Verfügung gestellt wird.

Die Lösung des technischen Problems ergibt sich durch die Merkmale des Patentanspruches 1.

Durch die Betätigung des Fahrtrichtungsanzeigers an der Fahrerseite wählt die Auswertelogik eine zweite Abstandszeit t₂ (Folgezeit) aus, die kleiner als die erste Abstandszeit t₁ ist, so daß die momentane Geschwindigkeit V des Kraftfahrzeuges erhöht wird, wobei dies durch Erreichen der zweiten Abstandszeit t₂ oder die vorgegebene Grenzgeschwindigkeit V_{g} begrenzt ist. Dadurch wird die aktuelle Fahrspur des Kraftfahrzeuges analog eines Beschleunigungsstreifens benutzt, um das Einscheren in die andere Fahrspur, d. h. in die Überholspur bzw. die Spur des Gegenverkehrs, zu erleichtern. Durch die Verwendung einer zweiten Abstandszeit t₂ wird, im Gegensatz zur zeitlich begrenzten Deaktivierung des Verfahrens, eine Kollision mit dem vorausfahrenden Kraftfahrzeug ausgeschlossen, ohne das Kraftfahrzeug starr auf der Abstandszeit für den fließenden Verkehr zu halten.

Weitere vorteilhafte Ausgestaltungen der Erfindung ergeben sich aus den Unteransprüchen.

Bei Nichteinleitung des Überholvorganges nach einer fest einstellbaren Zeit oder bei Zurücksetzen des Fahrtrichtungsanzeigers an der Fahrerseite wählt die Auswertelogik wieder die erste Abstandszeit aus und erzeugt ein Stellsignal, so daß das Kraftfahrzeug solange verzögert wird, bis die erste Abstandszeit sich wieder eingestellt hat. Gegebenenfalls kann bei Abbruch des Überholvorganges aufgrund einer Zeitüberschreitung der Fahrtrichtungsanzeiger automatisch zurückgesetzt werden. Dadurch wird dem nachfolgenden Verkehr angezeigt, daß der Überholvorgang abgebrochen wurde, so daß dieser sich darauf einstellen kann, daß sich das Kraftfahrzeug auf die vorherige Abstandszeit wieder zurückfallen lassen wird.

Des weiteren kann auch vorgesehen sein, daß ein gezieltes Zurückfallen zum vorausfahrenden Fahrzeug vor Einleitung des Überholvorganges möglich ist, um die zur Verfügung stehende Beschleunigungsstrecke zu vergrößern. Dies kann manuell mittels eines Tasters realisiert werden, bei dessen Betätigung die Auswertelogik eine dritte Abstandszeit auswählt, die größer als die erste Abstandszeit ist. Alternativ kann mittels einer weiteren Erfassungseinrichtung der rückwärtige Verkehrraum auf der Überholspur ausgewertet werden. Abhängig von einer erfaßten, zum Einscheren geeigneten Lücke kann dann die Auswertelogik eine geeignete Überholstrategie auswählen, nämlich entweder die zweite oder die dritte Abstandszeit. Da teilweise ein Kraftfahrzeugführer eine individuelle Überholstrategie bevorzugt, kann weiter vorgesehen sein, daß jeweils nur eine einzige Strategie Anwendung findet, die durch Betätigung des Tasters auswählbar ist. Bei der Rückfallstrategie gibt es prinzipiell zwei Möglichkeiten, den Überholvorgang fortzuführen. Einerseits kann die Auswertelogik nach dem Erreichen der dritten Abstandszeit automatisch anschließend auf die zweite Abstandszeit schalten oder aber der Kraftfahrzeugführer leitet den Überholvorgang autonom unter Beibehaltung der dritten Abstandszeit ein.

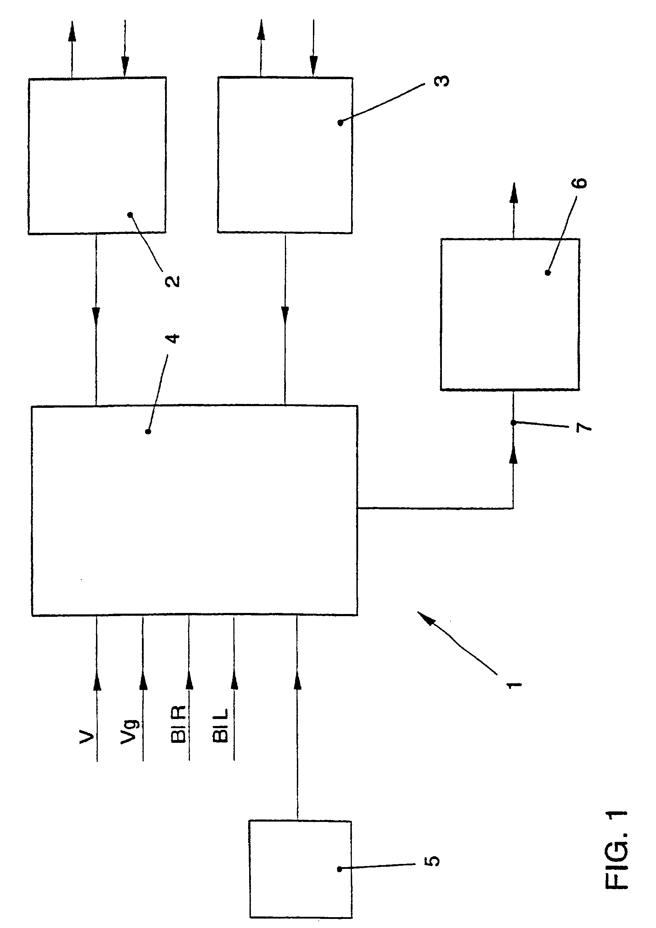

Die Erfindung wird nachfolgend anhand eines bevorzugten Ausführungsbeispieles näher erläutert. Die einzige Figur zeigt ein Blockschaltbild einer Vorrichtung zur Durchführung des Verfahrens.

Die Vorrichtung 1 zur Durchführung des Verfahren umfaßt eine erste Erfassungseinrichtung 2 zur Beobachtung des vorderen Verkehrsraumes und eine zweite Erfassungseinrichtung 3 zur Beobachtung des rückwärtigen Verkehrsraumes, die signaltechnisch mit einer Auswertelogik 4 verbunden sind. Der Auswertelogik 4 werden darüber hinaus die aktuelle Geschwindigkeit V, eine Grenzgeschwindigkeit V_{g} und Betätigungssignale des linken und rechten Fahrrichtungsanzeigers BIL bzw. BIR zugeführt. Des weiteren umfaßt die Vorrichtung 1 einen Taster 5 und ein die Fahrzeuggeschwindigkeit beeinflussendes Stellglied 6.

Die Erfassungseinrichtung 2, die beispielsweise als Lidar- oder Radar-Abstandssensorik ausgebildet ist, dient in erster Linie zur Erfassung eines in der selben Fahrspur vorausfahrenden Kraftfahrzeuges. Wird ein vorausfahrendes Kraftfahrzeug erfaßt, so kann mittels der Daten der Erfassungseinrichtung 2 und der eigenen Geschwindigkeit V auf die Geschwindigkeit und den Abstand des vorausfahrenden Fahrzeuges zurückgeschlossen werden. Da Geschwindigkeit V und zugehöriger Sicherheitsabstand in einem proportionalen Zusammenhang stehen, kann statt dessen eine geschwindigkeitsunabhängige Abstands- oder Folgezeit verwendet werden. Solange kein vorausfahrendes Kraftfahrzeug erfaßt wird, fährt das Kraftfahrzeug mit der individuell eingestellten Grenzgeschwindigkeit V_{g}. Bei Erfassung eines vorausfahrenden Kraftfahrzeuges durch die Erfassungseinrichtung 2 muß hingegen die Geschwindigkeit V derart angepaßt werden, daß sich die vorgeschriebene Abstandszeit t₁ einstellt.

Dazu erzeugt die Auswertelogik 4 ein Stellsignal 7 für das beispielsweise als Drosselklappe ausgebildete Stellglied 6. Anschließend fährt das Kraftfahrzeug mit der gleichen Geschwindigkeit wie das vorausfahrende Kraftfahrzeug. Möchte nun der Kraftfahrzeugführer das vorausfahrende Kraftfahrzeug überholen, so setzt dieser zunächst den Fahrtrichtungsanzeiger an der Fahrerseite, wodurch die Auswertelogik 4 ein Signal BIL erhält. Mittels der Erfassungseinrichtung 3 wird dann die rückwärtige Überholspur nach einer geeigneten Lücke abgesucht, wobei zur Ermittlung von Abstand und Geschwindigkeit der Kraftfahrzeuge in der linken Fahrspur die gleichen Algorithmen Anwendung finden wie für die erste Erfassungseinrichtung 2. Wird beispielsweise ein sehr schnell fahrendes Kraftfahrzeug auf der Überholspur erfaßt, hinter dem sich eine Lücke zu einem anderen Fahrzeug befindet, müßte das zum Überholen ansetzende Kraftfahrzeug extrem schnell von seiner gegenwärtigen Geschwindigkeit beschleunigen, um das Risiko einer Kollision zu vermeiden. Daher wählt die Auswertelogik 4 eine zweite Abstandszeit t₂ aus, wobei t₂ > t₁ gilt. Dies führt dazu, daß die Auswertelogik 4 ein Stellsignal 7 erzeugt, so daß das Stellglied 6 eine geschwindigkeitserhöhende Maßnahme, beispielsweise ein Öffnen der Drosselklappe, einleitet. Dies führt zu einer Beschleunigung des Kraftfahrzeuges und einer Verkürzung der Abstandszeit zum vorausfahrenden Fahrzeug. Zieht nun das schnell fahrende Fahrzeug auf der Überholspur vorbei, so kann unmittelbar danach das Kraftfahrzeug seinen Überholvorgang einleiten, wobei eine geringere oder gar keine zusätzliche Beschleunigung notwendig ist, um eine Kollision mit dem nachfolgenden Kraftfahrzeug zu vermeiden. Sollte sich der Kraftfahrzeugführer verschätzt haben, so daß ein Überholvorgang nicht möglich ist, so besteht dennoch keine Gefahr einer Kollision mit dem vorausfahrenden Kraftfahrzeug, da die Regelung ein Annähern nur bis zur Abstandszeit t₂ erlaubt. Der Auswertelogik 4 ist ferner ein Timer oder ein Zähler zugeordnet, der durch das Signal BIL gestartet wird. Ist der Überholvorgang nach einer festgesetzten Zeit nicht durchgeführt worden, so wird automatisch der Fahrtrichtungsanzeiger zurückgesetzt und die Auswertelogik 4 wählt wieder die Abstandszeit t₁ aus. Die Auswertelogik 4 erzeugt ein entsprechendes Stellsignal 7, so daß das Kraftfahrzeug solange verzögert wird, bis sich die Abstandszeit t₁ wieder einstellt. Entsprechend läuft der Regelmechanismus ab, falls vor Ablauf der gesetzten Zeit der Kraftfahrzeugführer von sich aus den Fahrtrichtungsanzeiger zurücksetzt. Die Information, ob ein Überholvorgang eingeleitet wurde, erhält die Auswertelogik beispielsweise aus einer Lenkwinkelinformation und/oder von der Erfassungseinrichtung 2, beispielsweise wenn diese das vorausfahrende Fahrzeug nicht mehr erfaßt. Wird hingegen nicht der Fahrtrichtungsanzeiger an der Fahrerseite sondern der Fahrtrichtungsanzeiger an der Beifahrerseite betätigt, so bleibt der Regelmechanismus dagegen unverändert, d.h. die Abstandszeit t₁ bleibt erhalten. Zusätzlich kann vorgesehen sein, daß eine Betätigung des Fahrtrichtungsanzeigers an der Beifahrerseite sogar zu einer Verzögerung führt, da dies meist bei einer Autobahnfahrt vor einer Ausfahrt mit anschließender Geschwindigkeitsbegrenzung geschieht.

Eine andere mögliche Verkehrssituation vor dem geplanten Überholmanöver ist ein nahezu gleich schnelles Kraftfahrzeug auf der Überholspur. Dies könnte dazu führen, daß trotz der Beschleunigung in Richtung des vorausfahrenden Kraftfahrzeuges der Abstand beim Einscheren zum Kraftfahrzeug auf der Überholspur zu klein ist. In diesem Fall wählt die Auswertelogik 4 zunächst eine Abstandszeit t₃ aus , wobei t₃ > t₁ gilt. Dies führt zu einem gezielten Rückfallen hinter das vorausfahrende Kraftfahrzeug. Nach Erreichen der Abstandszeit t₃ wählt die Auswertelogik 4 die Abstandszeit t₂ aus, so daß dem Kraftfahrzeug eine verlängerte Beschleunigungsstrecke zur Verfügung gestellt wird, um mit nötigem Sicherheitsabstand zu dem Kraftfahrzeug auf der Überholspur einzuscheren. Nach Durchführung des Überholvorganges wählt dann die Auswertelogik 4 wieder die Abstandszeit t₁ aus, so daß falls von der Erfassungseinrichtung 2 ein neues vorausfahrendes Kraftfahrzeug erfaßt wird, die gesetzliche Abstandszeit wieder eingehalten wird.

Um dem Kraftfahrzeugführer nicht starr eine Überholstrategie aufzuzwingen, kann dieser mittels des Tasters 5 die Überholstrategie fest vorgeben. Des weiteren kann der Taster 5 auch die Erfassungseinrichtung 3 vollständig ersetzen. In diesem Fall wird stets die Abstandszeit t₂ bei Einleitung eines Überholvorganges ausgewählt, es sei denn, daß der Kraftfahrzeugführer aus eigener Entscheidung sich für die Überholstrategie mit der Abstandszeit t₃ und anschließend t₂ entscheidet, was dieser durch Betätigung des Tasters 5 erreichen kann.

## Patentansprüche

1. Verfahren zur Regelung von Geschwindigkeit und Abstand bei Überholvorgängen eines Kraftfahrzeuges mittels einer Erfassungseinrichtung (2) und einer Auswertelogik (4), umfassend folgende Verfahrensschritte:
a) kontinuierliche Auswertung der Daten der Erfassungseinrichtung (2), aus denen sich direkt oder indirekt Abstand und Geschwindigkeit eines vorausfahrenden Kraftfahrzeuges ableiten läßt,
b) Erfassung der Kraftfahrzeuggeschwindigkeit V, einer Grenzgeschwindigkeit V_{g}, eines Folgeabstands und einer Fahrtrichtungsanzeigebetätigung durch die Auswertelogik (4) und
c) Erzeugung eines Stellsignals (7) für mindestens eine die Kraftfahrzeuggeschwindigkeit V beeinflussende Stelleinrichtung (6) derart, daß eine vorgebbare, geschwindigkeitsunabhängige Abstandszeit t₁ durch das Kraftfahrzeug zu dem vorausfahrenden Kraftfahrzeug eingehalten wird,
**dadurch gekennzeichnet, daß**
d) bei Betätigung des einen Überholvorgang angebenden Fahrtrichtungsanzeigers die Auswertelogik (4) eine zweite, vorgebbare Abstandszeit t₂ auswählt, die gleich oder geringer als die erste vorgebbare Abstandszeit t₁ ist, und
e) Erzeugung eines Stellsignals (7) zur Erhöhung der Fahrzeuggeschwindigkeit V, bis die vorgegebene zweite Abstandzeit t₂ erreicht ist oder der Überholvorgang beendet wurde oder die eingestellte Grenzgeschwindigkeit V_{g} erreicht ist.

2. Verfahren nach Anspruch 1, **dadurch gekennzeichnet, daß** bei Nichteinleitung des Überholvorganges nach einer festen, vorgebbaren Zeit und/oder bei Betätigung des einen Überholvorgang angebenden Fahrtrichtungsanzeigers zurück in die Ausgangsstellung die Auswertelogik (4) wieder die erste Abstandszeit t₁ auswählt und ein Stellsignal (7) zur Verringerung der Kraftfahrzeuggeschwindigkeit V erzeugt, bis die erste Abstandszeit t₁ erreicht ist.

3. Verfahren nach Anspruch 1 oder 2, **dadurch gekennzeichnet, daß** bei Betätigung des Fahrtrichtungsanzeigers an der Beifahrerseite die erste Abstandszeit t₁ wieder eingestellt wird.

4. Verfahren nach Anspruch 3, **dadurch gekennzeichnet, daß** bei Betätigung des Fahrtrichtungsanzeigers an der Beifahrerseite die momentan gefahrene Geschwindigkeit als obere Grenzgeschwindigkeit V_{g} eingesetzt wird.

5. Verfahren nach einem der Ansprüche 1 bis 4, **dadurch gekennzeichnet, daß** mittels einer weiteren, den rückwärtigen Verkehr erfassenden Erfassungseinrichtung (3) die Überholspur nach einer Lücke ausgewertet wird und in Abhängigkeit der erfaßten Lücke von der Auswertelogik (4) die zweite Abstandszeit t₂ oder eine dritte Abstandszeit t₃ ausgewählt wird, wobei die dritte Abstandszeit t₃ größer als die erste Abstandszeit t₁ ist.

6. Verfahren nach einem der Ansprüche 1 bis 4, **dadurch gekennzeichnet, daß** mittels eines Tasters (5) und Betätigung des Fahrtrichtungsanzeigers an der Fahrerseite durch die Auswertelogik (4) eine dritte Abstandszeit t₃ ausgewählt wird, die größer als die erste Abstandszeit t₁ ist, nach deren Erreichen durch die Auswertelogik (4) die zweite Abstandszeit t₂ ausgewählt wird.

7. Verfahren nach einem der Ansprüche 1 bis 6, **dadurch gekennzeichnet, daß** bei Einleitung des Überholvorganges und Erfassung eines neuen vorausfahrenden Kraftfahrzeuges die Auswertelogik (4) wieder die erste Abstandszeit t₁ auswählt.

8. Verfahren nach einem der Ansprüche 2 bis 7, **dadurch gekennzeichnet, daß** bei Abbruch des Überholvorganges aufgrund einer Überschreitung der voreingestellten Zeit der Fahrtrichtungsanzeiger an der Fahrerseite automatisch zurückgesetzt wird.

## Claims

1. Method for regulating speed and distance during overtaking manoeuvres of a motor vehicle by means of a sensing device (2) and an evaluation logic (4), comprising the following method steps:
a) continuous evaluation of the data of the sensing device (2) from which the distance and speed of a motor vehicle which is travelling ahead can be derived directly or indirectly,
b) sensing of the vehicle speed V, a limiting speed V_{g}, a distance from a vehicle ahead and activation of the travel direction indicator by the evaluation logic (4), and
c) generation of an actuation signal (7) for at least one actuation device (6) which influences the speed V of the motor vehicle, in such a way that a predefineable distance time t₁ which is independent of the speed is complied with by the motor vehicle with respect to the motor vehicle travelling ahead, **characterized in that**
d) when the travel direction indicator which indicates an overtaking manoeuvre is activated, the evaluation logic (4) selects a second, predefineable distance time t₂ which is equal to or shorter than the first predefineable distance time t₁, and
e) generation of an actuation signal (7) in order to increase the speed V of the motor vehicle until the predefined second distance time t₂ is reached or the overtaking manoeuvre has been ended or the limiting speed V_{g} which is set is reached.

2. Method according to Claim 1, **characterized in that**, when the overtaking manoeuvre is not initiated after a fixed, predefineable time and/or when the travel direction indicator which indicates an overtaking manoeuvre is activated back into the home position, the evaluation logic (4) selects the first distance time t₁ again and generates an actuation signal (7) in order to reduce the speed V of the motor vehicle until the first distance time t₁ is reached.

3. Method according to Claim 1 or 2, **characterized in that**, when the travel direction indicator is actuated on the front seat passenger's side, the first distance time t₁ is set again.

4. Method according to Claim 3, **characterized in that**, when the travel direction indicator is actuated on the front seat passenger's side, the speed which is being travelled at that particular time is set as the upper limiting speed V_{g}.

5. Method according to one of Claims 1 to 4, **characterized in that** the overtaking lane is evaluated after a gap by means of a further sensing device (3) which senses the traffic behind, and the second distance time t₂ or a third distance time t₃ is selected by the evaluation logic (4) as a function of the sensed gap, the third distance time t₃ being longer than the first distance time t₁.

6. Method according to one of Claims 1 to 4, **characterized in that** a third distance time t₃, which is longer than the first distance time t₁, is selected by the evaluation logic (4) by means of a momentary-contact pushbutton (5) and activation of the travel direction indicator on the driver's side, and the second distance time t₂ is selected by the evaluation logic (4) after the third distance time t₃ is reached.

7. Method according to one of Claims 1 to 6, **characterized in that** when an overtaking manoeuvre is initiated and a new motor vehicle travelling ahead is sensed, the evaluation logic (4) selects the first distance time t₁ again.

8. Method according to one of Claims 2 to 7, **characterized in that** when the overtaking manoeuvre is aborted owing to the preset time being exceeded, the travel direction indicator on the driver's side is automatically reset.

## Revendications

1. Procédé de régulation de la vitesse et de la distance lors de manoeuvres de dépassement d'un véhicule automobile au moyen d'un organe détecteur (2) et d'une logique d'évaluation (4), comprenant les étapes de procédé suivantes :
a) évaluer constamment les données de l'organe détecteur (2) desquelles on peut déduire, directement ou indirectement, la distance et la vitesse d'un véhicule automobile suivi,
b) acquérir, à l'aide de la logique d'évaluation (4), la vitesse V du véhicule automobile, une vitesse limite V_{g}, une distance par rapport au véhicule suivi et une sollicitation de la commande de l'indicateur de changement de direction et
c) produire un signal de commande (7) pour au moins un actionneur (6) destiné à régler la vitesse V du véhicule automobile de manière à permettre au véhicule automobile de respecter, par rapport au véhicule suivi, une phase de régulation de distance t₁, que l'on peut prédéterminer et qui est indépendante de la vitesse,
**caractérisé en ce**
d) que, lorsque le conducteur sollicite la commande de l'indicateur de changement de direction pour signaler son intention de dépasser, la logique d'évaluation (4) sélectionne une deuxième phase de régulation de distance t₂ que l'on peut prédéterminer et qui est inférieure ou égale à la première phase de régulation de distance t₁ que l'on peut prédéterminer, et
e) qu'un signal de commande (7) est produit pour augmenter la vitesse V du véhicule jusqu'à ce que la deuxième phase de régulation de distance t₂ qui l'on peut prédéterminer ait été mise en oeuvre ou jusqu'à ce que la manoeuvre de dépassement ait été terminée ou bien que la vitesse limite réglée V_{g} ait été atteinte.

2. Procédé selon la revendication 1, **caractérisé en ce que**, si la manoeuvre de dépassement n'a pas été amorcée après écoulement d'un temps fixe que l'on peut prédéterminer et/ou si le conducteur éteint l'indicateur de changement de direction signalant son intention de dépasser et le ramène dans sa position initiale, la logique d'évaluation (4) sélectionne à nouveau la première phase de régulation de distance t₁ et produit un signal de commande (7) pour réduire la vitesse V du véhicule automobile jusqu'à ce que la première phase de régulation de distance t₁ soit atteinte.

3. Procédé selon la revendication 1 ou 2, **caractérisé en ce que**, si le conducteur sollicite la commande de l'indicateur de changement de direction du côté du passager, on remet en oeuvre la première phase de régulation de distance t₁.

4. Procédé selon la revendication 3, **caractérisé en ce que**, si le conducteur sollicite la commande de l'indicateur de changement de direction du côté du passager, on utilise la vitesse à laquelle le véhicule est en train de rouler comme vitesse limite supérieure V_{g}.

5. Procédé selon l'une quelconque des revendications 1 à 4, **caractérisé en ce qu'**un organe détecteur (3) supplémentaire, qui détecte le trafic circulant à l'arrière du véhicule suiveur, évalue la voie de dépassement à la recherche d'un espacement et que la logique d'évaluation (4) sélectionne la deuxième phase de régulation de distance t₂ ou une troisième phase de régulation de distance t₃ en fonction de l'espacement détecté, la troisième phase de régulation de distance t₃ étant supérieure à la première phase de régulation de distance t₁.

6. Procédé selon l'une quelconque des revendications 1 à 4, **caractérisé en ce que**, par l'intermédiaire d'une touche (5) et de la sollicitation de la commande de l'indicateur de changement de direction du côté du conducteur, la logique d'évaluation (4) sélectionne une troisième phase de régulation de distance t₃ qui est supérieure à la première phase de régulation de distance t₁ et que la logique d'évaluation (4) sélectionne la deuxième phase de régulation de distance t₂ quand la troisième est atteinte.

7. Procédé selon l'une quelconque des revendications 1 à 6, **caractérisé en ce que** la logique d'évaluation (4) resélectionne la première phase de régulation de distance t₁ lorsque le conducteur amorce la manoeuvre de dépassement et lorsqu'un nouveau véhicule suivi est détecté.

8. Procédé selon l'une quelconque des revendications 2 à 7, **caractérisé en ce que** l'indicateur de changement de direction du côté du conducteur est automatiquement éteint si le conducteur interrompt la manoeuvre de dépassement en raison du dépassement du temps prédéterminé.
